(19)

**Europäisches Patentamt**
**European Patent Office**
**Office européen des brevets**

(11) **EP 4 544 172 B1**

(12) **EUROPEAN PATENT SPECIFICATION**

(45) Date of publication and mention
of the grant of the patent:
**03.12.2025 Bulletin 2025/49**

(21) Application number: **23735590.4**

(22) Date of filing: **21.06.2023**

(51) International Patent Classification (IPC):
*F03D 1/02* *(2006.01)* *F03D 7/02* *(2006.01)*

(52) Cooperative Patent Classification (CPC):
**F03D 1/02; F03D 7/0264; F03D 7/0292;**
F05B 2270/332; Y02E 10/72

(86) International application number:
**PCT/DK2023/050158**

(87) International publication number:
**WO 2023/246998 (28.12.2023 Gazette 2023/52)**

(54) **METHOD OF OPERATING A MULTI-ROTOR WIND TURBINE AND RELATED SYSTEM**

VERFAHREN ZUM BETRIEB EINER WINDTURBINE MIT MEHREREN ROTOREN UND
ZUGEHÖRIGES SYSTEM

PROCÉDÉ DE MISE EN FONCTIONNEMENT D'UNE ÉOLIENNE À ROTORS MULTIPLES ET
SYSTÈME ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.06.2022 DK PA202270335**

(43) Date of publication of application:
**30.04.2025 Bulletin 2025/18**

(73) Proprietor: **VESTAS WIND SYSTEMS A/S**
**8200 Aarhus N (DK)**

(72) Inventors:
• **FILSOOF, Oliver Tierdad**
**8200 Aarhus N (DK)**
• **NETO, Julio Xavier Vianna**
**8200 Aarhus N (DK)**

• **WOLLESEN, Anders**
**8200 Aarhus N (DK)**

(74) Representative: **Vestas Patents Department**
**Hedeager 42**
**8200 Aarhus N (DK)**

(56) References cited:
**EP-A1- 3 591 218     US-A1- 2020 332 765**

• **SORENSERR KIM HYLLING ET AL: "Multi-Rotor
Wind Turbine Control Challenge - A Benchmark
for Advanced Control Development", 2018 IEEE
CONFERENCE ON CONTROL TECHNOLOGY
AND APPLICATIONS (CCTA), IEEE, 21 August
2018 (2018-08-21), pages 1615 - 1622,
XP033430159, DOI: 10.1109/CCTA.2018.8511511**

## Description

## Technical Field

The invention relates generally to multi-rotor wind turbines, and more particularly to a method that minimizes the impact of allowing operation of a multi-rotor wind turbine in a partial operating state on the operational lifespan of the multi-rotor wind turbine.

## Background

Wind turbines produce electrical energy using a renewable resource and without combusting fossil fuels. Generally, a wind turbine converts kinetic wind energy into mechanical energy and then subsequently converts the mechanical energy into electrical energy. A common type of wind turbine is the single rotor upwind horizontal-axis wind turbine. This type of wind turbine typically includes a tower, a nacelle located at the apex of the tower, and a single rotor having a central hub and one or more blades (e.g., three blades) mounted to the hub that extend radially therefrom. The rotor is supported by the nacelle and positioned at the front of the nacelle so that the rotor faces into the wind upwind of its supporting tower. The rotor is operationally coupled to a generator housed inside the nacelle and configured to convert the mechanical energy of the rotor into electrical energy. Wind turbine manufacturers continually strive to increase power production from wind turbines. In this regard, the design of the wind turbine often plays a significant role in the power output generated from the wind. For example, energy obtained from the wind is generally proportional to the sweep area of the wind turbine blades. Because longer blades trace a larger area with their blade tips than shorter blades, the swept area of the rotor can be increased by using longer wind turbine blades. Thus, all else being equal, more energy can be extracted from a given amount of wind by a single rotor wind turbines having longer blades than one with shorter blades. However, the continued increase in the length of the wind turbine blades has certain practical limits and poses significant design challenges for wind turbine manufacturers.

Accordingly, as an alternative to ever larger single-rotor wind turbines, wind turbine manufacturers have looked to multi-rotor wind turbines, see for instance US 2020/332765 A1 and EP 3591 218 A1. Multi-rotor wind turbines generally incorporate multiple rotors on a single support tower, and provide a potential route to increase energy capture and power production as multiplying the number of rotors effectively increases the sweep area of the wind turbine. It should be appreciated that there are different types of multi-rotor wind turbines. For example, one type of multi-rotor wind turbine is a coplanar multi-rotor wind turbine. In a coplanar wind turbine, multiple rotors are arranged such that the individual wind turbine blades on each rotor generally lie within the same plane. The support structure generally includes horizontal support arms connected to the tower to space the coplanar rotors apart sufficiently for simultaneous operation.

The energy generating units of a multi-rotor wind turbine may at times experience different operating conditions, e.g., due to wind shear, localize turbulence from the wake of another wind turbine, detection of a fault in the rotor nacelle assembly, component wear or failure, or any number of other reasons. These different conditions may require the controller to operate one or more of the energy generating units in a different mode than one or more of the other energy generating units. For example, one of the energy generating units may be taken out of operation while the others continue to generate power. When only a subset of the energy generating units of a wind turbine are operating, the wind turbine is said to be in a partial operating state.

When the wind turbine is in a partial operating state, the thrust forces generated by the different energy generating units may be more unequal than is typical for a wind turbine in either a full operating state (when all of the energy generating units are producing power) or a non-operating state (where none of the energy generating units are producing power). By way of example, when two energy generating units on opposite sides of the support tower are both operational, the thrust forces on the energy generating units are typically about equal. Similarly, when the two energy generating units are both non-operational, the thrust forces on the energy generating units are also typically about equal. Under these two operational conditions, the thrust from the two energy generating units will largely counteract each other, resulting in a relatively low yaw moment. In contrast, when one of the two energy generating units is operational and the other is non-operational, the disparity in thrust forces between the energy generating units will typically generate a relatively large yaw moment. Thus, while the wind turbine is operated in the partial operating state, the cumulative thrust force produced by the energy generating units tends to be more asymmetric about the tower axis, and therefore tends to generate a larger yaw moment than when the wind turbine is operated in either the full operating state or the non-operating state.

These unequal thrust forces may introduce higher than normal loads in the wind turbine, especially in the support structure carrying the energy generating units and the yaw mechanism.

When operating conditions at one of the energy generating units of a multi-rotor wind turbine are such that the energy generating unit must be taken out of operation, it is generally preferable to allow the remaining energy generating units to keep producing power. Although allowing operation of wind turbines in the partial operating state may increase the annual energy production of the wind turbines, it also has the potential to reduce the operational lifetime of the wind turbines due to increased loading.

Accordingly, wind turbine manufacturers and operators seek improved methods of operating wind turbines, e.g., such as at a wind park, in the partial operating state that minimizes the impact of partial operation on the operational lifetime of the wind turbines.

## Summary

To address these and other drawbacks, and in a first aspect of the invention, a method of controlling a wind turbine including a plurality of energy generating units is disclosed. The wind turbine is preferably operable in a full operating state where all of the plurality of energy generating units are operating, a partial operating state where only a subset of the plurality of energy generating units is operating, and a non-operating state where none of the plurality of energy generating units are operating. The method includes determining that the wind turbine is operating in, or conditions are right for switching operation to, the partial operating state, and determining a cumulative amount of operation of the wind turbine in the partial operating state over a period of time. In response to the cumulative amount of operation in the partial operating state being below a partial operation threshold, the method operates the wind turbine in the partial operating state. In response to the cumulative amount of operation in the partial operating state being above the partial operation threshold, the method restricts the wind turbine from operating in the partial operating state.

In one embodiment, the amount of operation being accumulated may include at least one of an amount of time, an amount of movement of the wind turbine, an amount of energy generated by the wind turbine, an amount of loading on the wind turbine, an amount of fatigue on the wind turbine, an amount of wear to the wind turbine, and an amount of damage to the wind turbine.

In another embodiment, the amount of movement may include at least one of a rotation of a yaw mechanism about a tower axis, a rotation of a rotor about an axis of rotation, and a rotation of a blade about a pitch axis.

In another embodiment, determining the cumulative amount of operation may include setting a partial operation flag while the wind turbine is operated in the partial operating state, clearing the partial operation flag while the wind turbine is not operated in the partial operating state, and filtering the partial operation flag to produce the cumulative amount of operation.

In another embodiment, filtering the partial operation flag may include at least one of applying a low-pass filter to the operation flag or applying a moving average filter to the partial operation flag.

In another embodiment, the period of time may be a moving window of time having a set duration and ending at a present time, or a window of time that extends from a fixed point in time until the present time.

In another embodiment, the cumulative amount of operation may be weighted based on at least one of an amount of loading on the wind turbine, an amount of vibration of a rotor nacelle assembly of the wind turbine, and a wind speed at the wind turbine.

In another embodiment, the loading may include a thrust load, a torque load, or both the thrust load and the torque load acting on a yawing mechanism of the wind turbine.

In another embodiment, the cumulative amount of operation may be a first cumulative amount of operation over a first period of time, the partial operation threshold may be a first partial operation threshold, and the method may further include determining a second cumulative amount of operation of the wind turbine in the partial operating state over a second period of time. In this embodiment, the wind turbine may be operated in the partial operating state in response to both the first cumulative amount of operation being below the first partial operation threshold and the second cumulative amount of operation being below a second partial operation threshold, and the wind turbine may be restricted from operating in the partial operating state in response to either the first cumulative amount of operation being above the first partial operation threshold or the second cumulative amount of operation being above the second partial operation threshold.

In another embodiment, the plurality of energy generating units may include a left energy generating unit and a right energy generating unit, the first cumulative amount of operation may only be accumulated while the wind turbine is operated in the partial operating state when the right energy generating unit is not operating, and the second cumulative amount of operation may only be accumulated while the wind turbine is operated in the partial operating state when the left energy generating unit is not operating.

In another embodiment, the first period of time may be coextensive with the second period of time.

In another embodiment, the first period of time may be a window of time that extends from a fixed point in time until a present time, and the second period of time may be a moving window of time having a set duration and ending at the present time.

In another embodiment, the method may further include reducing or resetting the cumulative amount of operation of the wind turbine in response to maintenance being performed on the wind turbine.

In another embodiment, the method may further include increasing the partial operation threshold in response to maintenance being performed on the wind turbine.

In another embodiment, the method may further include determining the wind speed at the wind turbine, and in response to the wind speed being in a restricted range, restricting the wind turbine from operating in the partial operating state.

In a further aspect of the invention, a control system for controlling a wind turbine including a plurality of energy generating units is disclosed. The system includes one or more processors, and a memory coupled to the one or more processors. The memory includes program code that, when executed by the one or more processors, causes the control system to determine that the wind turbine is operating in, or conditions are right for switching operation to, the partial operating state where only the subset of the plurality of energy generating units is operating, and determine the cumulative amount of operation of the wind turbine in the partial operating state over the period of time. In response to the cumulative amount of operation in the partial operating state being below the partial operation threshold, the program code causes the control system to operate the wind turbine in the partial operating state. In response to the cumulative amount of operation in the partial operating state being above the partial operation threshold, the program code causes the control system to restrict the wind turbine from operating in the partial operating state.

In a further aspect of the invention, a wind turbine including the plurality of energy generating units and the control system is disclosed. The control system is configured to determine that the wind turbine is operating in, or conditions are right for switching operation to, the partial operating state where only the subset of the plurality of energy generating units is operating, and determine the cumulative amount of operation of the wind turbine in the partial operating state over the period of time. The control system is further configured to, in response to the cumulative amount of operation in the partial operating state being below the partial operation threshold, operate the wind turbine in the partial operating state, and in response to the cumulative amount of operation in the partial operating state being above the partial operation threshold, restrict the wind turbine from operating in the partial operating state.

In a further aspect of the invention, a computer program product for operating the multi-rotor wind turbine having the plurality of energy generating units is disclosed. The computer program product includes a non-transitory computer-readable storage medium and program code stored on the non-transitory computer-readable storage medium. The program code is configured so that, when executed by one or more processors, it causes the one or more processors to determine that the wind turbine is operating in, or conditions are right for switching operation to, the partial operating state where only a subset of the plurality of energy generating units is operating, and determine a cumulative amount of operation of the wind turbine in the partial operating state over a period of time. In response to the cumulative amount of operation in the partial operating state being below a partial operation threshold, the program code causes the one or more processors to operate the wind turbine in the partial operating state. In response to the cumulative amount of operation in the partial operating state being above the partial operation threshold, the program code causes the one or more processors to restrict the wind turbine from operating in the partial operating state.

## Brief Description of the Drawings

The accompanying drawings, which are incorporated in and constitute a part of this specification, illustrate one or more embodiments of the invention and, together with a general description of the invention given above, and the detailed description given below, serve to explain the invention.

Fig. 1 is a front plan view of a multi-rotor wind turbine;

Fig. 2 is a schematic top plan view of a wind park having a plurality of multi-rotor wind turbines with wind emanating from the prevailing wind direction $W_p$;

Fig. 3 is a schematic top plan view of adjacent wind turbines from Fig. 2 operating with the wind emanating from a direction generally perpendicular to the prevailing wind direction $W_p$ illustrating a downwind wind turbine within the critical wake region of an upwind wind turbine, and the energy generating units of the downwind wind turbine in a non-power generating mode;

Fig. 4 is a schematic top plan view of adjacent wind turbines from Fig. 3 illustrating the downwind wind turbine within the critical wake region of the upwind wind turbine and the downwind wind turbine being in a partial operating state;

Fig. 5 is a diagrammatic view of a control system that may be used to implement an operational management scheme for the multi-rotor wind turbine in accordance with an embodiment of the invention;

Fig. 6 is another diagrammatic view of a control system that may be used to implement an operational management scheme for the multi-rotor wind turbine in accordance with another embodiment of the invention;

Fig. 7 is a diagrammatic view of a controller that may be used to implement the control system of Fig. 5 or Fig. 6;

Fig. 8 is a flow chart of a process for controlling the operation of a multi-rotor wind turbine in accordance with an embodiment of the invention; and

Fig. 9 is a graphical view depicting the power output and thrust versus wind speed for an energy generating unit of the wind turbines of Figs. 1-4.

## Detailed Description

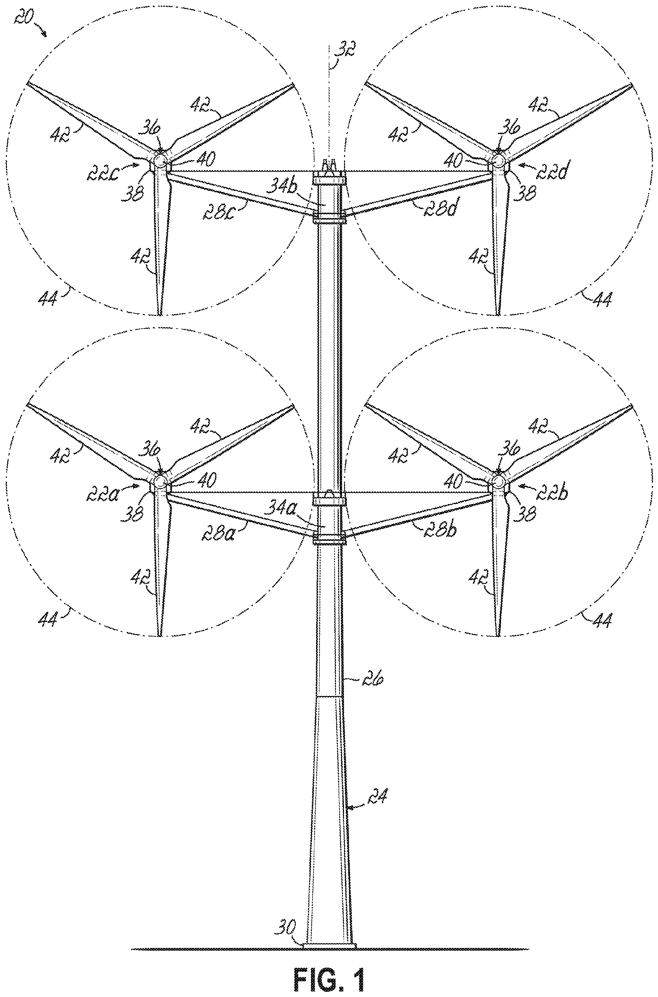

Fig. 1 depicts an exemplary multi-rotor wind turbine 20 including a plurality of energy generating units 22 and a support structure 24 that supports the energy generating units 22. The wind turbine 20 may be configured, for example, as a coplanar multi-rotor wind turbine. However, it should be appreciated that other multi-rotor arrangements may benefit from aspects of the present invention. Thus, the invention should not be limited to the exemplary embodiments shown and described herein. The support structure 24 includes a tower 26 and a plurality of support arms 28 mounted to the tower 26 for carrying the energy generating units 22. The tower 26 may be coupled to Earth by a foundation 30 at a lower end thereof to define a generally vertical tower axis 32. The foundation 30 may be a relatively large mass formed from concrete, steel, etc., that transfers forces acting on the wind turbine 20 into the ground. Alternatively, the foundation 30 may be a pile or other structure at an offshore location to which the wind turbine 20 is attached. Each of the support arms 28 has a proximal end adjacent the tower 26 and extends generally outward from the tower 26 to a distal or tip end spaced from the tower 26. Each support arm 28 may include various beams and/or lattice structures sufficient to accommodate one or more energy generating units 22 at a distance from the tower 26 and tower axis 32.

By way of example, in one embodiment, the support arms 28 may include beams having a circular or other suitable cross-section, and may extend outward from the tower 26 for a distance that depends on the size of the energy generating units 22. The support arms 28 may be formed from steel or any other suitable material and extend from the tower 26 in a substantially perpendicular manner or at angles other than 90 degrees. For example, the support arms 28 may extend in a generally upward direction (as shown), downward direction, or forward direction. Each support arm 28 may extend from the tower 26 at substantially the same angle as the other support arms 28, or may extend from the tower 26 at a different angle than one or more of the other support arms 28. One or more cables or guy wires may also be associated with each support arm 28 to provide additional support.

Each of the support arms 28 may be operationally coupled to the tower 26 by a yaw mechanism 34 that allows the support arms 28, and the energy generating units 22 attached thereto, to rotate about the tower axis 32. The yaw mechanism 34 may thereby direct the energy generating units 22 into the wind. The yaw mechanism 34 may include one or more yaw bearings and one or more yaw actuators (not shown) that enable rotation of the support arms 28 relative to the tower 26 about the tower axis 32. By way of example, two or more support arms 28 may be coupled to the same yaw mechanism 34, and the wind turbine 20 may include one or more yaw mechanisms 34 vertically distributed along the height of the tower 26.

The depicted wind turbine 20 includes a lower yaw mechanism 34a and an upper yaw mechanism 34b. The lower yaw mechanism 34a operatively couples a left support arm 28a and a right support arm 28b to the tower 26. A respective energy generating unit 22a, 22b may be coupled to each support arm 28a, 28b adjacent to a tip end thereof. In a similar manner, the upper yaw mechanism 34b operatively couples a left support arm 28c and a right support arm 28d to the tower 26, and respective energy generating units 22c, 22d may be coupled to each support arm 28c, 28d adjacent to the tip end thereof. Thus, the exemplary multi-rotor wind turbine 20 includes four energy generating units 22a, 22b, 22c, 22d supported on the same tower 26. However, it should be appreciated that embodiments of the invention are not limited to this arrangement, and multi-rotor wind turbines 20 having other configurations and numbers of energy generating units 22 may also be operated using any of the operational management schemes disclosed herein.

The energy generating units 22 refer the portions of the wind turbine 20 that transform wind energy into electrical energy, and each support arm 28 may be configured to carry at least one energy generating unit 22 at a generally fixed distance from the tower 26. Each energy generating unit 22 typically includes a rotor 36, a nacelle 38, and a generator (not shown). The rotor 36 may include a central hub 40 and one or more blades 42 (e.g., three blades) that extend radially from the hub 40. The generator is operatively coupled to the hub 40, e.g., by a drive train including a gear arrangement that interconnects the rotor 36 and the generator. The generator and a substantial portion of the drive train may be positioned inside the nacelle 38. Although the energy generating unit 22 is depicted as being positioned adjacent a tip end of each of the support arms 28, it should be recognized that energy generating units 22 may be positioned at other locations along the support arm 28, and that each support arm 28 may carry more than one energy generating unit 22. The arrangement of the energy generating units 22 on the tower 26 is configured to prevent the blades 42 of adjacent rotors 36 from contacting each other in operation. Accordingly, the energy generating units 22 are sufficiently spaced from one another to avoid such contact. The wind turbine blades 42 are configured to interact with a free stream air flow (the wind) to produce lift that causes the rotors 36 to spin or rotate generally within a plane defined by the wind turbine blades 42. Thus, the energy generating units 22 are able to generate power from the airflow that passes through the swept area 44 of each of the rotors 36.

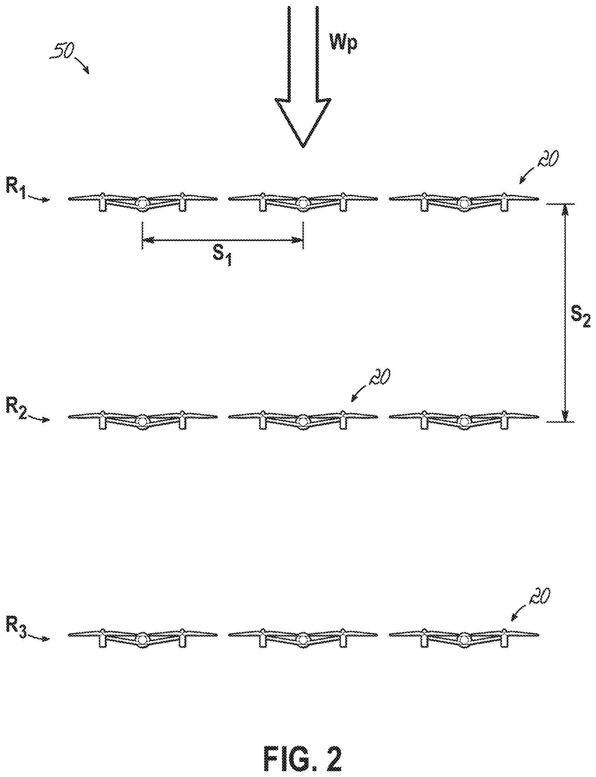

In accordance with an exemplary operational scenario in which the wind turbine 20 may be operated in a partial operating state, Fig. 2 depicts a plurality of multi-rotor wind turbines 20 arranged in a multi-dimensional array that defines an exemplary wind park 50. The rows $R_1$-$R_3$ of wind turbines 20 may be oriented so that they are generally perpendicular to the prevailing wind $W_p$ at

the wind park 50. The multi-dimensional array includes a spacing $S_1$ between wind turbines 20 in the same row that prevents contact between the rotors 36 of adjacent wind turbines 20, and a spacing $S_2$ between rows sufficient to allow the wake region to passively dissipate prior to the airflow of the prevailing wind impacting the downwind wind turbines 20. In other words, the spacing $S_2$ between the wind turbines 20 in adjacent rows $R_1$-$R_3$ may be a distance greater than the length of the critical wake regions of the wind turbines 20.

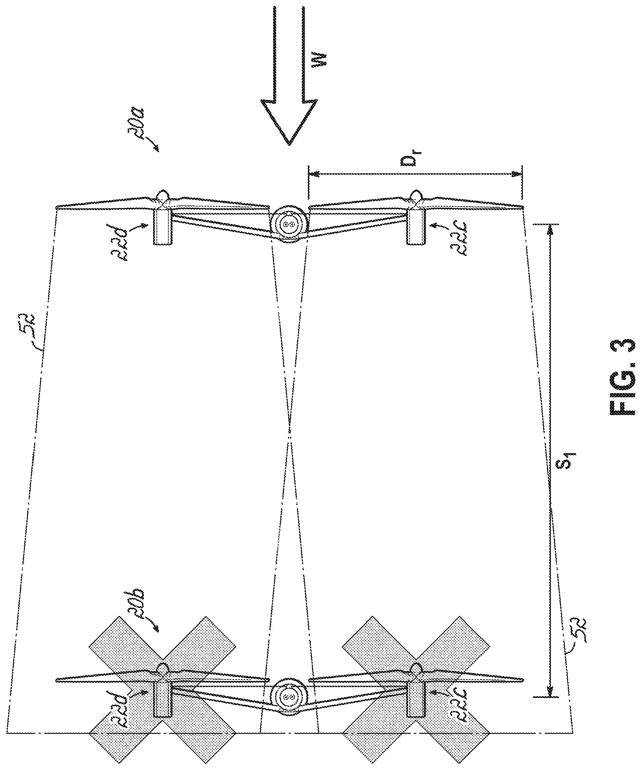

Under certain conditions, a wind turbine 20 may be placed into a non-operating state. Fig. 3 depicts one exemplary condition that may occur when the rotors 36 of a downwind wind turbine 20b are in the critical wake regions 52 of an upwind wind turbine 20a, e.g., due to the wind W blowing from a direction other than the prevailing wind direction $W_p$. In the non-operating state, all of the energy generating units 22 of wind turbine 20 are put into non-power generating modes (i.e., taken out of operation), as denoted by each X. Non-power generating modes may include, but are not limited to, an idle mode, stop mode, motor mode, etc.

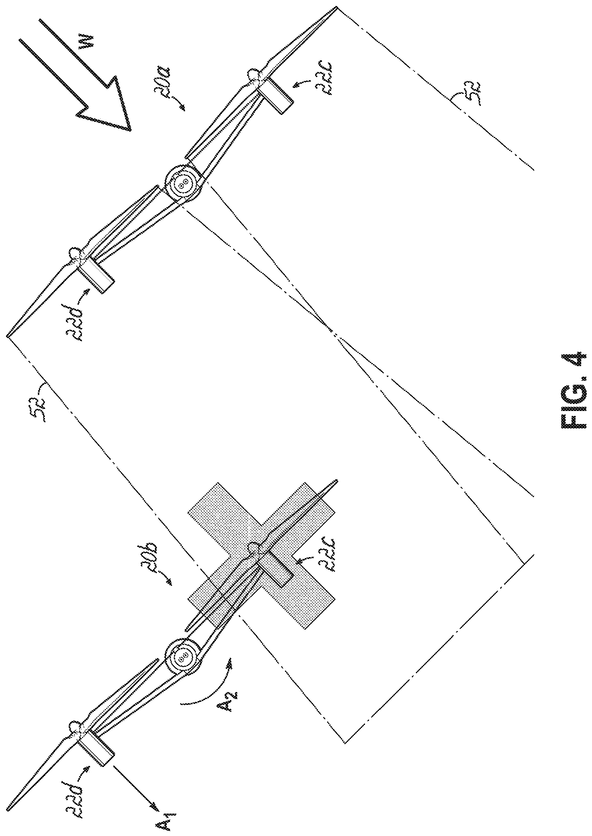

Fig. 4 depicts the wind turbines 20 of Fig. 3 with the wind W shifted such that only one of the rotors 36 of the downwind wind turbine 20b is in the critical wake region 52 of the upwind wind turbine 20a. Under these exemplary operational conditions, the downwind wind turbine 20b may be placed into the partial operating state. In the partial operating state, the energy generating unit 22 of wind turbine 20b within the critical wake region 52 has been placed in a non-power generating mode (i.e., taken out of operation), and the energy generating unit 22 of downwind wind turbine 20b that is not within the critical wake region 52 remains in a power generating mode (e.g., remains in operation). Power generating modes may include, a normal operating mode, a derated operating mode, or any other mode under which the energy generating unit generates electrical power.

It should be recognized that a wind turbine 20 may be placed into a partial operating state for reasons other than one of the energy generating units 22 being in a critical wake region. For example, a wind turbine 20 may be placed into a partial operating state in response to detecting a fault condition (e.g., component failure, rotor imbalance, blade pitch error, etc.) in a subset (i.e., at least one but not all) of the energy generating units 22 that requires those units to be placed in a non-power generating mode. Partial operation may also occur during maintenance activities that only affect a subset of the energy generating units 22 of the wind turbine 20, or due to any other condition or reason that requires some but not all energy generating units 22 of the wind turbine 20 to be placed in a non-power generating mode. Thus, aspects of the invention are not limited to the particular scenario depicted in the figures but generally apply to a host of situations where operation of a wind turbine in a partial operating state may occur.

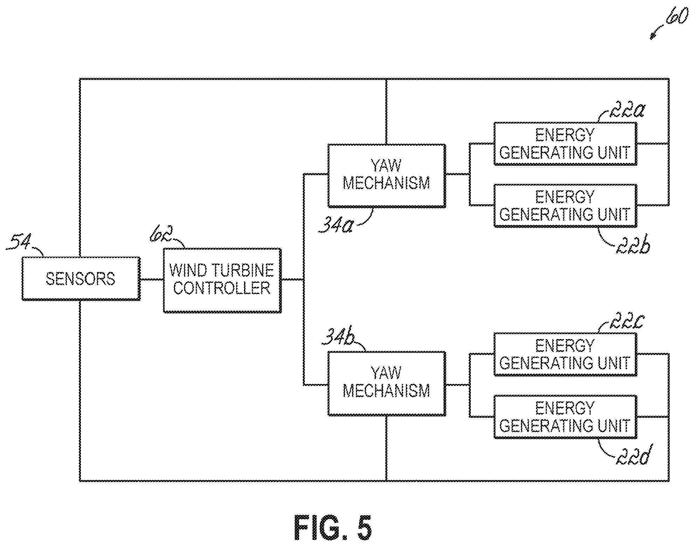

Fig. 5 illustrates an exemplary embodiment of a control system 60 for operating one or more wind turbines 20 of the wind park 50 according to the operational management schemes described above. In the depicted embodiment, the control system 60 may follow a distributed control model that is implemented on each of the plurality of wind turbines 20 in the wind park 50. The control system 60 includes a plurality of wind turbine controllers 62 (one shown) each associated with a respective wind turbine 20 of the wind park 50. The wind turbine controller 62 may be configured to implement a control strategy for the wind turbine 20 that optimizes the performance of the wind turbine 20, e.g., to maximize energy production of the wind turbine 20. The wind turbine controller 62 may be configured to control operation of the wind turbine 20 with which it is associated and communicate with the yaw mechanisms 34 and the energy generating units 22 of the wind turbine 20.

The control system 60 may include one or more sensors 54 in communication with the wind turbine controller 62 that facilitate monitoring and/or operation of the wind turbine 20. By way of example, the one or more sensors 54 may include one or more wind sensors for determining information about the oncoming wind, such as wind direction, wind speed, turbulence level, etc. Additionally, the one or more sensors 54 may include one or more position sensors for determining, for example, the yaw position of the rotors 36 of the energy generating units 22 of the wind turbine 20. Furthermore, the one or more sensors 54 may include a host of other sensors, such as pressure sensors, temperature sensors, load sensors, stress sensors, strain sensors, vibration sensors, or other sensors each operatively coupled to the wind turbine controller 62 to facilitate operation of the wind turbine 20 and implementation of one or more operational management schemes. Such sensors 54, as well as methods of processing signals generated by the sensors 54 to determine amounts of loading, fatigue, wear, or damage to the wind turbine 20 or components thereof, are generally well known in the wind turbine industry. Accordingly, a further description of the one or more sensors 54, or methods of processing the signals generated thereby, is not provided herein for the sake of brevity.

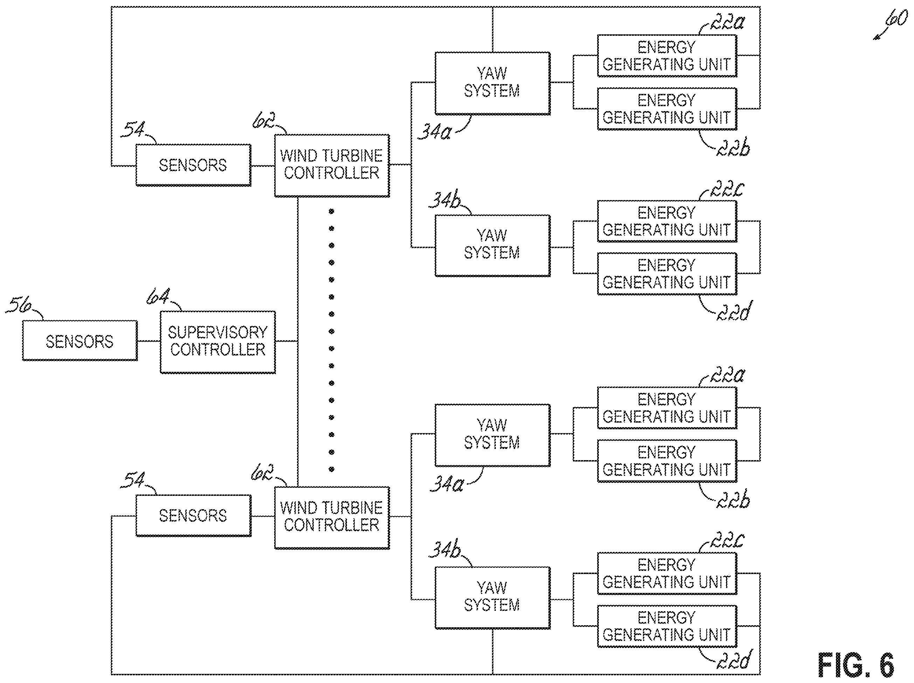

Fig. 6 illustrates another exemplary embodiment of the control system 60 for operating the wind turbines 20 of wind park 50 according to any of the operational management schemes described above. In this embodiment, the control system 60 may be a centralized control model and implemented on the wind park level instead of at the individual wind turbines 20. In this centralized model, the control system 60 includes a wind park supervisory controller 64 in communication with each of the plurality of wind turbine controllers 62. The supervisory controller 64 may be configured to implement a system-wide control strategy for the plurality of wind turbines 20 that form the wind park 50 which optimizes the collective performance of the wind park 50.

As described above, the wind turbine controller 62 is configured to control operation of the wind turbine 20 with which it is associated and communicates with the yaw mechanisms 34 and the energy generating units 22 associated with the wind turbine 20. The control system 60 may further include one or more additional sensors 56 in communication with the supervisory controller 64 that facilitate operation of the wind turbines 20 of the wind park 50 and implementation of an operational management scheme at a wind park level. For example, the one or more sensors 56 may provide data on conditions pertaining to the wind park 50 as a whole (as opposed to individual wind turbines 20). By way of example, the one or more sensors 56 may include one or more wind sensors for determining information about the oncoming wind, e.g., wind direction, wind speed, turbulence level, etc. In this embodiment, for example, the one or more sensors 56 may be disassociated from the plurality of wind turbines 20 that make up the wind park 50 and communicate directly with the supervisory controller 64.

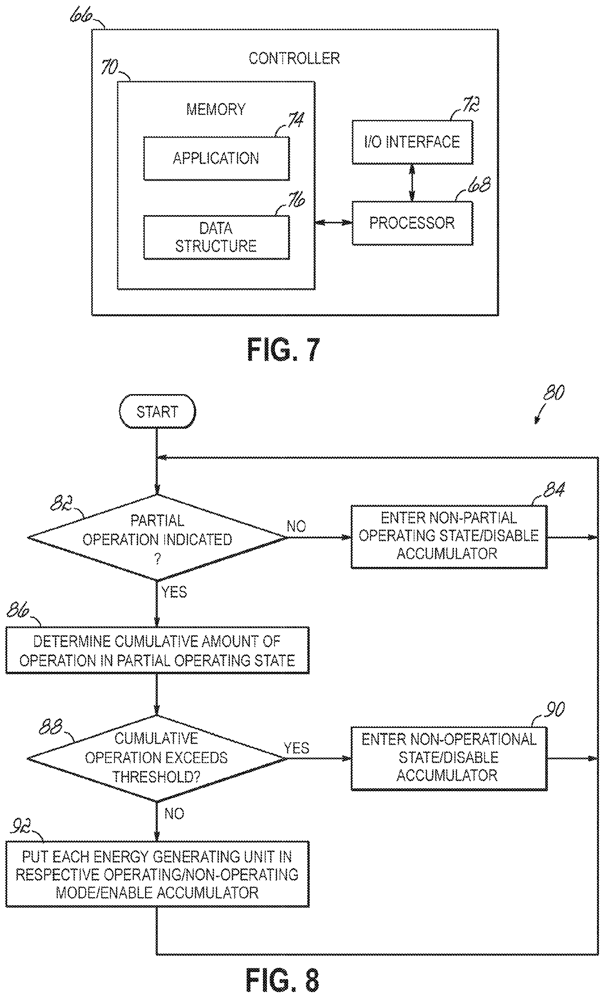

Fig. 7 illustrates an exemplary controller 66 that may be used to provide one or more components of the control system 60, such as the wind turbine controller 62 and supervisory controller 64. The controller 66 includes a processor 68, memory 70, and an input/output (I/O) interface 72. The processor 68 may include one or more devices that perform operations on data based on internal logic or operational instructions that are stored in memory 70. Memory 70 may include a single memory device or a plurality of memory devices capable of storing data. Computer program code embodied as one or more computer software applications, such as an application 74 residing in memory 70, may have instructions executed by the processor 68. One or more data structures 76 may also reside in memory 70 and may be used by the processor 68 or application 74 to store or manipulate data. The I/O interface 72 may provide a machine interface that operatively couples the processor 68 to other devices and systems, such as the sensors 54, 56, supervisory controller 62, wind turbine controller 64, yaw mechanisms 34, and energy generating units 22. The application 74 may thereby work cooperatively with the external devices and systems by communicating via the I/O interface 74 to provide the various features, functions, applications, processes, or modules comprising embodiments of the invention.

When wind acts on the rotor 36 of an energy generating unit 22, the rotor 36 exerts thrust on the energy generating unit 22 as the rotor 36 rotates. This thrust results in forces being transferred through the energy generating unit 22 to the support structure 24 of wind turbine 20. For a multi-rotor wind turbine, this rotor thrust may be different for each energy generating unit 22. Differences in the force exerted on the support structure 24 by different energy generating units 22 may be caused by different wind conditions (e.g., due to wind shear) or by differences in how the energy generating units 22 are being operated. In particular, the amount of thrust exerted on an energy generating unit 22 by the rotor 36 can vary depending on the amount of power the energy generating unit 22 is generating. Thus, operating some energy generating units 22 in a power generating mode while operating other energy generating units 22 in a non-power generating mode on the same wind turbine 20 can lead to relatively large differences between the forces being exerted on the support structure 24 by the different energy generating units 22.

Because the energy generating units 22 may be operated in both power producing and non-power producing modes on the same wind turbine 20 when that wind turbine is in the partial operating state, the wind turbine 20 may be subjected to higher force imbalances than are normal in either of the full or non-operating states. Countering these force imbalances between different energy generating units 22 may subject the support structure 24 to higher-than-normal loads. These higher-than-normal loads may in turn contribute to accelerated wear and fatigue on various components of the support structure 24, such as the tower 26, support arms 28, and yaw mechanism 34.

Accordingly, it may be desirable to implement strategies for mitigating the effects of these higher-than-normal loads in multi-rotor wind turbines 20 that are operated in the partial operating state. These strategies may decrease wear or damage due to both load cycling (i.e., fatigue) and overloading (i.e., failure). One such strategy is to limit the amount of time the wind turbine 20 is allowed to be operated in the partial operating state to only a portion of an operational period, e.g., a predetermined percentage of a year. This type of limitation may be implemented, for example, by tracking how much time the wind turbine spends in the partial operating state. Limits on operation in the partial operating state may also be implemented by tracking movement of, energy generated by, or loading, fatigue, wear, vibration, or damage to the wind turbine 20 or components thereof. In response to the tracked parameter exceeding a partial operation threshold, the wind turbine may be prohibited from further operation in the partial operating state.

Fig. 8 depicts a flowchart illustrating a process 80 for controlling a multi-rotor wind turbine 20 that may be implemented to operate the wind turbine 20 in accordance with the general principles of operation described above. The process 80 may be executed by one or more of the wind turbine controller 62, the supervisory controller 64, or any other suitable computing device. Although a cumulative amount of operation is described below primarily in terms of an accumulated amount of time, it should be understood that other operational parameters may be accumulated to generate the cumulative amount of operation. These operational parameters may include one or more of an amount of movement of the wind turbine 20 (e.g., rotation of the yaw mechanism 34 about the tower axis 32, rotation of the rotor 36 about its axis of rotation, rotation of the blades 42 about a pitch axis, etc.), an amount of energy generated by the wind turbine 20, or an amount of loading, fatigue, wear, vibration, or damage to the wind turbine 20 or components thereof.

In block 82, the process 80 may determine if partial operation of the wind turbine is indicated. Partial operation may be indicated, for example, if the rotor 36 of at least one energy generating unit 22 of the wind turbine 20 is within the critical wake region 52 of another energy generating unit 22, and the rotor 36 of at least one other energy generating unit 22 of the wind turbine 20 is not within the critical wake region 52 of any energy generating unit 22. Other examples of partial operation being indicated may include detection of a fault condition, a maintenance window, or any other condition that causes a subset of the energy generating units 22 to be placed in a non-power generating mode.

If partial operation is not indicated ("NO" branch of decision block 82), the process 80 may proceed to block 84 and cause the wind turbine 20 to enter a non-partial operating state, e.g., a full operating state (if none of the energy generating units 22 are to be placed in a non-power generating mode) or a non-operating state (if all energy generating units 22 are to be placed in a non-power generating mode). The process 80 may also disable an accumulator function, as described in more detail below.

If partial operation is indicated ("YES" branch of decision block 84), the process 80 may proceed to block 86 and determine a cumulative amount of operation of the wind turbine 20 in the partial operating state. This cumulative amount of operation may be determined, for example, by accumulating an amount of time the wind turbine 20 has operated in the partial operating state over a preceding period of time. This preceding period of time may be, for example, a moving window of time having a set duration (e.g., a year) and ending at the present time. As another example, the preceding period of time may extend from a fixed point in time (e.g., when the wind turbine 20 went into service or was last repaired) until the present time. A period of time extending from the time the wind turbine 20 went into service until the present time may be referred to as the lifetime of the wind turbine 20.

In any case, the process 80 may determine the cumulative amount of operation of the wind turbine 20 in the partial operating state, for example, by starting the accumulator function each time a partial operation flag is set, and stopping the accumulator function each time the partial operation flag is cleared. The partial operation flag may be set each instance the wind turbine 20 enters the partial operating state, and cleared each time the wind turbine exits the partial operating state. The value accumulated by the accumulator function while the wind turbine 20 is in the partial operating state may include an amount of time, movement, energy generated, loading, fatigue, wear, vibration, or damage.

The accumulator function may include, for example, a timer that counts upward while the accumulator function is enabled and that stops counting when the accumulator function is disabled such that the timer provides a value equal to the total amount of time the accumulator function has been enabled. In an alternative embodiment, the accumulator function may keep a record of the wind turbine 20 operating state over time (e.g., the full operating state, partial operating state, and non-operating state), and then sum the time spent in one or more of those states during the period of time.

Time may be accumulated by the accumulator function as "actual time" or "weighted time". Actual time refers to an unweighted time the wind turbine has operated in the state in question, e.g., time in which one second is accumulated for each second the wind turbine has operated in the partial operating state. In contrast, weighted time refers to a sum of the time the wind turbine has operated in the state in question with the time being multiplied by a time-varying weighting factor. For example, under conditions that have been determined to cause twice the normal amount of wear, two seconds may be accumulated for each second the wind turbine operates in the partial operating state under those conditions. The weighting factor may be determined, for example, based on sensor signals indicative of a load, stress, or strain on one or more components of the wind turbine 20. The weighting factor may also be based on an amount of load, stress, or strain on one or more components of the wind turbine 20 estimated from the operating conditions of the wind turbine 20, such as wind speed, amount of power being generated, pitch and yaw settings, etc. Weighting factor values may be determined empirically based on historical data collected from wind turbines in the field, based on simulation, by any other suitable methods. Weighting factors may thereby be used to produce a cumulative amount of operation that reflects a cumulative amount of loading, fatigue, wear, or damage to the wind turbine 20 or a component thereof.

The weighting factor may also be determined based on an amount of vibration (e.g., bending and/or torsional vibration) in the tower 24, yaw mechanism 34, rotor 36, nacelle 38, rotor 36 and nacelle 38 as an assembly (the rotor and nacelle assembly), or in any other component of the wind turbine 20. In particular, the amount of torsional vibration experienced by yaw mechanism 34 may be determined, and a weighting factor generated based thereon.

In alternative embodiment, the process 80 may determine the cumulative amount of operation of the wind turbine 20 in the partial operating state by filtering the output of the partial operation flag, e.g., through a low-pass filter. The filter may be configured to have a time response such that the rise time of the output of the filter corresponds to cumulative amount of operation exceeding the partial operation threshold. In a similar manner as described above for the accumulator-based determination, the output of the partial operation flag may be weighted. This weighting on the input to the filter may increase or decrease how long it takes for the output of the filter to reach a level indicative of a specific cumulative amount of operation.

In block 88, the process 80 may compare the cumulative amount of operation to the partial operation threshold. The partial operation threshold may define a limit on the total amount of time (weighted or unweighted) the wind turbine 20 is allowed to operate in the partial operating state. The partial operation threshold may define an allowable maximum in terms of total time (e.g., 2500 hours/year or 20,000 hour lifetime limit), a maximum percentage of time the wind turbine 20 can operate in the partial operating state over a moving period of time (25% of previous year), using a moving average window, or any other suitable threshold for determining when the wind turbine 20 is or is not allowed to be currently operated in the partial operating state based on a cumulative amount of operation in the partial operating state. In the case of a moving average window, operational data may be stored for a period of time (e.g., the previous 12 months), and moving averages compared for different time windows within the period of time. Data used to determine the cumulative amount of operation may be stored using non-volatile memory to avoid loss of this data due to a power outage.

In response to the cumulative amount of operation exceeding the partial operation threshold ("YES" branch of decision block 88), the process 80 may proceed to block 90. In block 90, the process 80 may cause the wind turbine 20 to enter a non-operating state and, if there is an enabled accumulator function, disable the accumulator function. The process 80 may then return to block 82.

In response to the cumulative amount of operation not exceeding the partial operation threshold ("NO" branch of decision block 88), the process 80 may proceed to block 92. In block 92, the process 80 may cause the wind turbine 20 to enter the partial operating state and, if the process 80 includes an accumulator function in a disabled state, enable the accumulating function. The process 80 may then return to block 82.

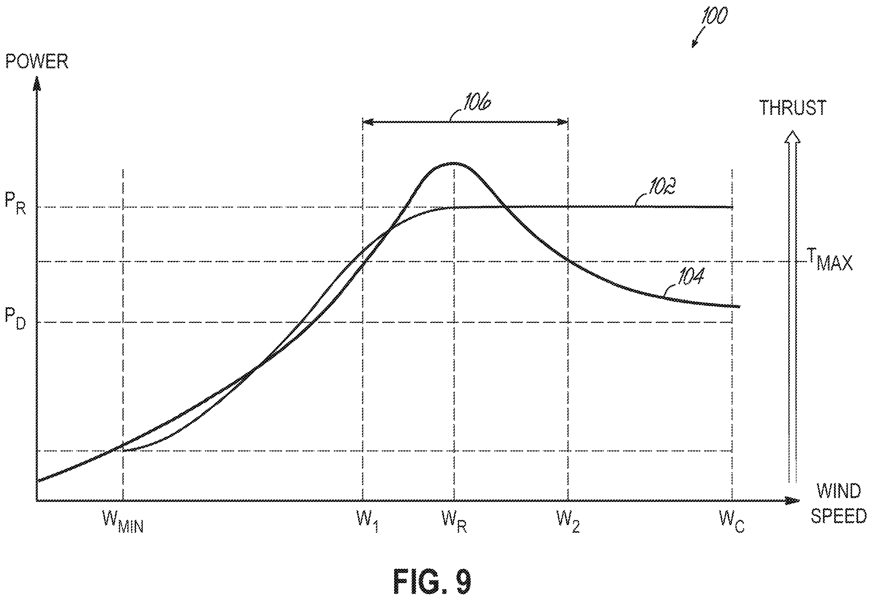

Fig. 9 depicts a graph 100 including an exemplary plot 102 of output power versus wind speed, or "power curve", and an exemplary plot 104 of thrust load versus wind speed, or "thrust curve", for an energy generating unit 22. When the wind speed is below a cut-in wind speed $W_{MIN}$, the energy generating unit 22 may be in an idle mode during which the rotors 36 are not rotating or only slowly rotating. As the wind speed exceeds the cut-in wind speed $W_{MIN}$, the rotors 36 of energy generating unit 22 may begin to rotate, thereby allowing the energy generating units 22 to begin generating power. As the wind speed further increases from the cut-in wind speed $W_{MIN}$ up to a rated wind speed $W_R$, the blade pitch may be set to maximize the conversion of aerodynamic energy into rotational energy at the energy generating unit 22. Thus, between the cut-in wind speed $W_{MIN}$ and the rated wind speed $W_R$, the power output of the energy generating unit 22 may increase as the wind speed increases. Once the rated wind speed $W_R$ has been reached, the energy generating unit 22 may be generating electricity at its maximum rated output power. From this point on, as the wind speed increases further, the blade pitch may be adjusted to maintain the speed and torque applied to the energy generating unit 22 at the rated output power. Finally, when the wind speed reaches a cut-out wind speed $W_C$, the blades 42 may be feathered to prevent damage to the wind turbine 20, thereby cutting the output power of the energy generating units 22 to zero. As shown by the thrust curve, thrust loads $T_L$ produced by the energy generating unit 22 tend to increase as the wind speed increases from the cut-in wind speed up to a certain point (e.g., the rated wind speed $W_R$), and tend to decrease as the wind speed increases from the peak thrust loading wind speed up to the cut-out wind speed. Thus, the thrust loads $T_L$ may be highest at a specific wind speed, such as in a region near the rated wind speed $W_R$.

Referring again to Fig. 1, and with continued reference to Fig. 9, due to the lateral separation between energy generating units 22 on support arms 28 extending from opposite sides of the tower 26, for wind turbines 20 in a partial operating state, the number of energy generating units 22 operating on some support arms (e.g., support arms 28a, 28c) may be different than the number of energy generating units 22 operating on other support arms (e.g., support arms 28b, 28d). This is the scenario depicted in Fig. 4, for example. As a result, the thrust load $T_L$, denoted by arrow $A_1$ in Fig. 4, acting on the support structure 24 of the wind turbine 20 may be unbalanced. This unbalanced thrust load may result in a torque load $M_L$, denoted by arrow $A_2$, being applied to the tower 26 about the tower axis 32. The imbalance in the thrust load $T_L$, and the resulting torque load $M_L$, must be accommodated by the yaw mechanisms 34 associated with the support structure 24. It should be appreciated that if the thrust/torque produced from the partial operating state of the wind turbine 20 becomes excessively high, the yaw mechanisms 34 of wind turbine 20 may be damaged. To avoid excessive torque loads on the yaw mechanisms 34 of wind turbine 20, operation of the wind turbine 20 in the partial operating state may be restricted for wind speeds that produce a thrust load greater than $T_{MAX}$. Accordingly, the partial operating state may be curtailed in a restricted wind speed region 106 between $W_1$ and $W_2$ for the exemplary energy generating unit 22 characterized by graph 100 of Fig. 9.

In an embodiment of the invention, curtailment of the partial operating state may include prohibiting the wind turbine 20 from entering the partial operating state any time the wind speed is in the restricted wind speed region 106. In an alternative embodiment, curtailment of the partial operating state may only prohibit the wind turbine 20 from entering the partial operating state when the wind speed is in the restricted wind speed region 106 and the cumulative amount of operation is above a lower partial operation threshold. In this embodiment, partial operation would be allowed when the wind speed is outside the restricted wind speed region 106 when the cumulative amount of operation is above the lower partial operation threshold but below an upper partial operation threshold, and prohibited at all wind speeds when the cumulative amount of operation is above the upper partial operation threshold. That is, above the upper partial operation threshold, the wind turbine 20 would be restricted from operating in the partial operating state regardless of the wind speed.

The wind turbine 20 may be determined to be operating in the restricted range of wind speed based on a direct measurement of wind speed at the wind turbine 20 or energy generating unit 22, or operation in the restricted range may be inferred based on one or more other measured parameters, such as estimated or measured thrust, pitch angle, power output, rotor speed, generator speed, etc.

By way of example, if certain characteristics of the oncoming wind are known and the geometry of the energy generating unit 22 is known, the thrust load $T_L$ of an energy generating unit 22 may be estimated. By way of example, in one embodiment, the thrust load $T_L$ of an energy generating unit 22 in a normal operating mode may be estimated according to the following equation:

$$T_L = \frac{1}{2}\, \rho\, S_w^2\, C_t(\lambda, \theta)\, \pi\, \left(\frac{D_r}{2}\right)^2,$$

where $\rho$ is the air density, $S_w$ is the wind speed, $C_t$ is the thrust coefficient (which is a function of the tip speed ratio $\lambda$ and the pitch angle $\theta$), and $D_r$ is the rotor diameter. The wind turbine 20 and/or the energy generating units 22 may include various sensors, including blade root bending moment sensors, pitch position sensors, rotor speed sensors (e.g., for tip speed ratio $\lambda$), and various temperature, pressure, and/or humidity sensors to determine the air density $\rho$. Thus, if this information is known, then the thrust load $T_L$ of an energy generating 22 may be estimated. Much like the determination of the wind direction W, the one or more sensors 54, 56 associated with the control systems 62, 64 may be configured to provide this information. Accordingly, in this embodiment, the thrust load $T_L$ and/or the torque load $M_L$ on the one or more yaw mechanisms 34a, 34b of the wind turbine 20 may be estimated based on measurements from the one or more sensors 54, 56.

The thrust load $T_L$ and/or the torque load $M_L$ on the one or more yaw mechanisms 34a, 34b of the wind turbine 20 may also be determined through active measurement. In this regard, the one or more sensors 54, 56 of the controllers 62, 64 may include various sensors operatively coupled to the yaw mechanisms 34a, 34b for measuring the loads. By way of example, the one or more sensors 56 may include strain gauges, pressure sensors, displacement sensors, or other sensors for indicating thrust and/or torque loads. Based on the measurements from these sensors 54, 56, it can be determined if the thrust load $T_L$ and/or the torque load $M_L$ exceeds the predetermined load threshold $L_T$. These measurements may also be used to weight the parameter being accumulated to generate the cumulative amount to operation.

Allowing wind turbines 20 of wind park 50 to operate in a partial operating state may reduce electrical production losses due to the need to shut down an entire wind turbine each time any of the energy generating units 22 encounter a problem, thereby increasing the overall energy production of the wind turbines 20 and the annual energy production of the wind park 50. By allowing wind turbines 20 of the wind park 50 to operate in a partial operating state, care must be taken to ensure that partial operation does not lead to premature wear or damage, thereby erasing any economic benefit of the increase in energy production. Controlling the amount of operation of wind turbines 20 in the partial operating state may allow for an increase in the annual energy production of the wind turbine 20 (and the wind park 50) without unnecessarily risking shortening the life of the wind turbines 20.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A method of controlling a wind turbine including a plurality of energy generating units, the wind turbine being operable in a full operating state where all of the plurality of energy generating units are operating, a partial operating state where only a subset of the plurality of energy generating units is operating, and a non-operating state where none of the plurality of energy generating units are operating, the method comprising:

determining that the wind turbine is operating in, or conditions are right for switching operation to, the partial operating state; **characterized by** determining a cumulative amount of operation of the wind turbine in the partial operating state over a period of time;
in response to the cumulative amount of operation in the partial operating state being below a partial operation threshold, operating the wind turbine in the partial operating state, and
in response to the cumulative amount of operation in the partial operating state being above the partial operation threshold, restricting the wind turbine from operating in the partial operating state.

2. The method of claim 1, wherein the amount of operation being accumulated includes at least one of an amount of time, an amount of movement of the wind turbine, an amount of energy generated by the wind turbine, an amount of loading on the wind turbine, an amount of fatigue on the wind turbine, an amount of wear to the wind turbine, and an amount of damage to the wind turbine.

3. The method of claim 2, wherein the amount of movement includes at least one of a rotation of a yaw mechanism about a tower axis, a rotation of a rotor about an axis of rotation, and a rotation of a blade about a pitch axis.

4. The method of any of claims 1 to 3, wherein determining the cumulative amount of operation comprises:

   setting a partial operation flag while the wind turbine is operated in the partial operating state; clearing the partial operation flag while the wind turbine is not operated in the partial operating state; and filtering the partial operation flag to produce the cumulative amount of operation.

5. The method of any of claims 1-4, wherein the cumulative amount of operation is weighted based on at least one of an amount of loading on the wind turbine, an amount of vibration of a rotor nacelle assembly of the wind turbine, an amount of vibration of a tower of the wind turbine, and a wind speed at the wind turbine.

6. The method of claim 5, wherein the loading includes a thrust load, a torque load, or both the thrust load and the torque load acting on a yawing mechanism of the wind turbine.

7. The method of any of claims 1-6, wherein the cumulative amount of operation is a first cumulative amount of operation over a first period of time, the partial operation threshold is a first partial operation threshold, and further comprising: determining a second cumulative amount of operation of the wind turbine in the partial operating state over a second period of time, wherein:

   the wind turbine is operated in the partial operating state in response to both the first cumulative amount of operation being below the first partial operation threshold and the second cumulative amount of operation being below a second partial operation threshold, and the wind turbine is restricted from operating in the partial operating state in response to either the first cumulative amount of operation being above the first partial operation threshold or the second cumulative amount of operation being above the second partial operation threshold.

8. The method of claim 7, wherein the plurality of energy generating units includes a left energy generating unit and a right energy generating unit, the first cumulative amount of operation is only accumulated while the wind turbine is operated in the partial operating state when the right energy generating unit is not operating, and the second cumulative amount of operation is only accumulated while the wind turbine is operated in the partial operating state when the left energy generating unit is not operating.

9. The method of claim 7 or 8, wherein the first period of time is coextensive with the second period of time.

10. The method of claim 7 or 8, wherein the first period of time is a window of time that extends from a fixed point in time until a present time, and the second period of time is a moving window of time having a set duration and ending at the present time.

11. The method of any of claims 1-10, further comprising: reducing or resetting the cumulative amount of operation of the wind turbine in response to maintenance being performed on the wind turbine.

12. The method of any of claims 1-11, further comprising: increasing the partial operation threshold in response to maintenance being performed on the wind turbine.

13. The method of any of claims 1-12, further comprising:

    determining a wind speed at the wind turbine; and in response to the wind speed being in a restricted range, restricting the wind turbine from operating in the partial operating state.

14. A control system for controlling a wind turbine including a plurality of energy generating units, the control system comprising:

    one or more processors; and a memory coupled to the one or more processors and including program code that, when executed by the one or more processors, causes the control system to:

       determine that the wind turbine is operating in, or conditions are right for switching operation to, a partial operating state where only a subset of the plurality of energy generating units is operating; **characterized by** causing the control system to

determine a cumulative amount of operation of the wind turbine in the partial operating state over a period of time;

in response to the cumulative amount of operation in the partial operating state being below a partial operation threshold, operate the wind turbine in the partial operating state, and

in response to the cumulative amount of operation in the partial operating state being above the partial operation threshold, restrict the wind turbine from operating in the partial operating state.

15. A wind turbine, comprising:

a plurality of energy generating units; and
a control system configured to:

determine that the wind turbine is operating in, or conditions are right for switching operation to, a partial operating state where only a subset of the plurality of energy generating units is operating; **characterized by** being configured to

determine a cumulative amount of operation of the wind turbine in the partial operating state over a period of time;

in response to the cumulative amount of operation in the partial operating state being below a partial operation threshold, operate the wind turbine in the partial operating state, and

in response to the cumulative amount of operation in the partial operating state being above the partial operation threshold, restrict the wind turbine from operating in the partial operating state.

**Patentansprüche**

1. Verfahren zum Steuern einer Windkraftanlage, die eine Vielzahl von Energieerzeugungseinheiten beinhaltet, wobei die Windkraftanlage in einem Vollbetriebszustand, in dem alle der Vielzahl von Energieerzeugungseinheiten betrieben werden, einem Teilbetriebszustand, in dem nur eine Teilmenge der Vielzahl von Energieerzeugungseinheiten betrieben wird, und einem Außerbetriebszustand, in dem keine der Vielzahl von Energieerzeugungseinheiten betrieben wird, betrieben werden kann, wobei das Verfahren umfasst:

Feststellen, dass die Windkraftanlage im Teilbetriebszustand betrieben wird oder die Bedingungen für Umschalten des Betriebs in diesen Zustand gegeben sind; **gekennzeichnet durch** Feststellen eines kumulierten Betriebsumfangs der Windkraftanlage im Teilbetriebszustand über einen Zeitraum;

als Reaktion darauf, dass der kumulierte Betriebsumfang im Teilbetriebszustand unter einem Teilbetriebsschwellenwert liegt, Betreiben der Windkraftanlage im Teilbetriebszustand und als Reaktion darauf, dass der kumulierte Betriebsumfang im Teilbetriebszustand über dem Teilbetriebsschwellenwert liegt, Einschränken des Betriebs der Windkraftanlage im Teilbetriebszustand.

2. Verfahren nach Anspruch 1, wobei der kumulierte Betriebsumfang mindestens eines von einer Zeitdauer, einem Bewegungsausmaß der Windkraftanlage, einer von der Windkraftanlage erzeugten Energiemenge, einem Belastungsgrad der Windkraftanlage, einem Ermüdungsgrad der Windkraftanlage, einem Verschleißgrad der Windkraftanlage und einem Schadensgrad der Windkraftanlage beinhaltet.

3. Verfahren nach Anspruch 2, wobei das Bewegungsausmaß mindestens eines von einer Drehung eines Giermechanismus um eine Turmachse, einer Drehung eines Rotors um eine Drehachse und einer Drehung eines Blattes um eine Nickachse beinhaltet.

4. Verfahren nach einem der Ansprüche 1 bis 3, wobei Feststellen des kumulativen Betriebsumfangs umfasst:

Setzen eines Teilbetriebs-Flags, während die Windkraftanlage im Teilbetriebszustand betrieben wird;
Löschen des Teilbetriebs-Flags, während die Windkraftanlage nicht im Teilbetriebszustand betrieben wird; und
Filtern des Teilbetriebs-Flags, um den kumulativen Betriebsumfang zu produzieren.

5. Verfahren nach einem der Ansprüche 1-4, wobei der kumulative Betriebsumfang auf der Grundlage mindestens eines von einem Belastungsgrad der Windkraftanlage, einer Vibrationsstärke einer Rotorgondelbaugruppe der Windkraftanlage, einer Vibrationsstärke eines Turms der Windkraftanlage und einer Windgeschwindigkeit an der Windkraftanlage gewichtet wird.

6. Verfahren nach Anspruch 5, wobei die Belastung eine Schublast, eine Drehmomentlast oder sowohl die Schublast als auch die Drehmomentlast beinhaltet, die auf einen Giermechanismus der Windkraftanlage einwirken.

**7.** Verfahren nach einem der Ansprüche 1-6, wobei der kumulative Betriebsumfang ein erster kumulativer Betriebsumfang über einen ersten Zeitraum ist, der Teilbetriebsschwellenwert ein erster Teilbetriebsschwellenwert ist, und weiter umfassend: Feststellen eines zweiten kumulativen Betriebsumfangs der Windkraftanlage im Teilbetriebszustand über einen zweiten Zeitraum, wobei:

die Windkraftanlage als Reaktion darauf im Teilbetriebszustand betrieben wird, dass sowohl der erste kumulierte Betriebsumfang unter dem ersten Teilbetriebsschwellenwert liegt als auch der zweite kumulierte Betriebsumfang unter einem zweiten Teilbetriebsschwellenwert liegt, und

der Betrieb der Windkraftanlage als Reaktion darauf im Teilbetriebszustand eingeschränkt wird, dass entweder der erste kumulative Betriebsumfang über dem ersten Teilbetriebsschwellenwert liegt oder der zweite kumulative Betriebsumfang über dem zweiten Teilbetriebsschwellenwert liegt.

**8.** Verfahren nach Anspruch 7, wobei die Vielzahl von Energieerzeugungseinheiten eine linke Energieerzeugungseinheit und eine rechte Energieerzeugungseinheit beinhaltet, wobei der erste kumulative Betriebsumfang nur kumuliert wird, während die Windkraftanlage im Teilbetriebszustand betrieben wird, wenn die rechte Energieerzeugungseinheit nicht betrieben wird, und wobei der zweite kumulative Betriebsumfang nur kumuliert wird, während die Windkraftanlage im Teilbetriebszustand betrieben wird, wenn die linke Energieerzeugungseinheit nicht betrieben wird.

**9.** Verfahren nach Anspruch 7 oder 8, wobei der erste Zeitraum mit dem zweiten Zeitraum übereinstimmt.

**10.** Verfahren nach Anspruch 7 oder 8, wobei der erste Zeitraum ein Zeitfenster ist, das sich von einem festen Zeitpunkt bis zu einem gegenwärtigen Zeitpunkt erstreckt, und der zweite Zeitraum ein gleitendes Zeitfenster mit einer festgelegten Dauer ist und zum gegenwärtigen Zeitpunkt endet.

**11.** Verfahren nach einem der Ansprüche 1-10, weiter umfassend: Reduzieren oder Zurücksetzen des kumulierten Betriebsumfangs der Windkraftanlage als Reaktion auf an der Windkraftanlage durchgeführte Wartungsarbeiten.

**12.** Verfahren nach einem der Ansprüche 1-11, weiter umfassend: Erhöhen der Teilbetriebsschwelle als Reaktion auf an der Windkraftanlage durchgeführte Wartungsarbeiten.

**13.** Verfahren nach einem der Ansprüche 1-12, weiter umfassend:

Feststellen einer Windgeschwindigkeit an der Windkraftanlage; und als Reaktion darauf, dass die Windgeschwindigkeit in einem eingeschränkten Bereich liegt, Einschränken des Betriebs der Windkraftanlage im Teilbetriebszustand.

**14.** Steuersystem zum Steuern einer Windkraftanlage, die eine Vielzahl von Energieerzeugungseinheiten beinhaltet, wobei das Steuersystem umfasst:

einen oder mehrere Prozessoren; und einen Speicher, der mit dem einen oder den mehreren Prozessoren gekoppelt ist und Programmcode beinhaltet, der, wenn er von dem einen oder den mehreren Prozessoren ausgeführt wird, das Steuersystem veranlasst:

festzustellen, dass die Windkraftanlage in einem Teilbetriebszustand betrieben wird oder die Bedingungen für Umschalten des Betriebs in diesen Zustand gegeben sind, in dem nur eine Teilmenge der Vielzahl von Energieerzeugungseinheiten betrieben wird; **dadurch gekennzeichnet, dass** das Steuersystem veranlasst wird, einen kumulativen Betriebsumfang der Windkraftanlage im Teilbetriebszustand über einen Zeitraum hinweg festzustellen; als Reaktion darauf, dass der kumulierte Betriebsumfang im Teilbetriebszustand unter einem Teilbetriebsschwellenwert liegt, die Windkraftanlage im Teilbetriebszustand zu betreiben, und als Reaktion darauf, dass der kumulierte Betriebsumfang im Teilbetriebszustand über dem Teilbetriebsschwellenwert liegt, den Betrieb der Windkraftanlage im Teilbetriebszustand einzuschränken.

**15.** Windkraftanlage, umfassend:

eine Vielzahl von Energieerzeugungseinheiten; und ein Steuersystem, das konfiguriert ist:

festzustellen, dass die Windkraftanlage in einem Teilbetriebszustand betrieben wird oder die Bedingungen für Umschalten des Betriebs in diesen Zustand gegeben sind, in dem nur eine Teilmenge der Vielzahl von Energieerzeugungseinheiten betrieben wird; **dadurch gekennzeichnet, dass** es konfiguriert ist, einen kumulativen Betriebsumfang der Windkraftanlage im Teilbetriebszustand über einen Zeitraum hinweg festzustellen;

als Reaktion darauf, dass der kumulierte Betriebsumfang im Teilbetriebszustand unter einem Teilbetriebsschwellenwert liegt, die Windkraftanlage im Teilbetriebszustand zu betreiben, und

als Reaktion darauf, dass der kumulierte Betriebsumfang im Teilbetriebszustand über dem Teilbetriebsschwellenwert liegt, den Betrieb der Windkraftanlage im Teilbetriebszustand einzuschränken.

## Revendications

1. Procédé de commande d'une éolienne incluant une pluralité d'unités de production d'énergie, l'éolienne pouvant fonctionner dans un état de fonctionnement complet dans lequel toutes les unités de production d'énergie de la pluralité d'unités de production d'énergie fonctionnent, un état de fonctionnement partiel dans lequel seul un sous-ensemble de la pluralité d'unités de production d'énergie fonctionne, et un état de non-fonctionnement dans lequel aucune des unités de production d'énergie de la pluralité d'unités de production d'énergie ne fonctionne, le procédé comprenant :

la détermination que l'éolienne fonctionne dans l'état de fonctionnement partiel, ou que les conditions sont propices à la commutation vers cet état ; **caractérisé par** la détermination d'une quantité cumulée de fonctionnement de l'éolienne dans l'état de fonctionnement partiel sur une période de temps ;

en réponse à la quantité cumulée de fonctionnement dans l'état de fonctionnement partiel qui est inférieure à un seuil de fonctionnement partiel, le fonctionnement de l'éolienne dans l'état de fonctionnement partiel, et

en réponse à la quantité cumulée de fonctionnement dans l'état de fonctionnement partiel qui est supérieure au seuil de fonctionnement partiel, la restriction du fonctionnement de l'éolienne dans l'état de fonctionnement partiel.

2. Procédé selon la revendication 1, dans lequel la quantité de fonctionnement qui est accumulée inclut au moins l'une d'une quantité de temps, d'une quantité de mouvement de l'éolienne, d'une quantité d'énergie produite par l'éolienne, d'une quantité de charge sur l'éolienne, d'une quantité de fatigue sur l'éolienne, d'une quantité d'usure de l'éolienne et d'une quantité de dommages à l'éolienne.

3. Procédé selon la revendication 2, dans lequel la quantité de mouvement inclut au moins l'une d'une rotation d'un mécanisme de lacet autour d'un axe de tour, d'une rotation d'un rotor autour d'un axe de rotation et d'une rotation d'une pale autour d'un axe de calage.

4. Procédé selon l'une quelconque des revendications 1 à 3, dans lequel la détermination de la quantité cumulée de fonctionnement comprend :

la définition d'un indicateur de fonctionnement partiel pendant que l'éolienne fonctionne dans l'état de fonctionnement partiel ;

l'effacement de l'indicateur de fonctionnement partiel pendant que l'éolienne ne fonctionne pas dans l'état de fonctionnement partiel ; et

le filtrage de l'indicateur de fonctionnement partiel pour produire la quantité cumulée de fonctionnement.

5. Procédé selon l'une quelconque des revendications 1-4, dans lequel la quantité cumulée de fonctionnement est pondérée sur la base d'au moins l'une d'une quantité de charge sur l'éolienne, d'une quantité de vibration d'un ensemble nacelle de rotor de l'éolienne, d'une quantité de vibration d'une tour de l'éolienne et d'une vitesse du vent au niveau de l'éolienne.

6. Procédé selon la revendication 5, dans lequel la charge inclut une charge de poussée, une charge de couple, ou à la fois la charge de poussée et la charge de couple agissant sur un mécanisme de lacet de l'éolienne.

7. Procédé selon l'une quelconque des revendications 1-6, dans lequel la quantité cumulée de fonctionnement est une première quantité cumulée de fonctionnement sur une première période de temps, le seuil de fonctionnement partiel est un premier seuil de fonctionnement partiel, et comprenant en outre : la détermination d'une seconde quantité cumulée de fonctionnement de l'éolienne dans l'état de fonctionnement partiel sur une seconde période de temps, dans lequel :

l'éolienne fonctionne dans l'état de fonctionnement partiel en réponse à la fois au fait que la première quantité cumulée de fonctionnement est inférieure au premier seuil de fonctionnement partiel et que la seconde quantité cumulée de fonctionnement est inférieure à un second seuil de fonctionnement partiel, et

le fonctionnement de l'éolienne dans l'état de fonctionnement partiel est restreint en réponse soit au fait que la première quantité cumulée de fonctionnement est supérieure au premier seuil de fonctionnement partiel, soit au fait que la seconde quantité cumulée de fonctionnement est supérieure au second seuil de fonctionnement partiel.

8. Procédé selon la revendication 7, dans lequel la pluralité d'unités de production d'énergie inclut une unité de production d'énergie gauche et une unité de production d'énergie droite, la première quantité cumulée de fonctionnement est uniquement accumulée pendant que l'éolienne fonctionne dans l'état de fonctionnement partiel lorsque l'unité de production d'énergie droite ne fonctionne pas, et la seconde quantité cumulée de fonctionnement est uniquement accumulée pendant que l'éolienne fonctionne dans l'état de fonctionnement partiel lorsque l'unité de production d'énergie gauche ne fonctionne pas.

9. Procédé selon la revendication 7 ou 8, dans lequel la première période de temps est coextensive à la seconde période de temps.

10. Procédé selon la revendication 7 ou 8, dans lequel la première période de temps est une fenêtre de temps qui s'étend d'un point fixe dans le temps jusqu'à un moment présent, et la seconde période de temps est une fenêtre de temps mobile présentant une durée définie et se terminant au moment présent.

11. Procédé selon l'une quelconque des revendications 1-10, comprenant en outre :
la réduction ou la réinitialisation de la quantité cumulée de fonctionnement de l'éolienne à la suite d'une maintenance qui est effectuée sur l'éolienne.

12. Procédé selon l'une quelconque des revendications 1-11, comprenant en outre :
l'augmentation du seuil de fonctionnement partiel à la suite d'une maintenance qui est effectuée sur l'éolienne.

13. Procédé selon l'une quelconque des revendications 1-12, comprenant en outre :

la détermination de la vitesse du vent au niveau de l'éolienne ; et
en réponse à la vitesse du vent qui est dans une plage restreinte, la restriction du fonctionnement de l'éolienne dans l'état de fonctionnement partiel.

14. Système de commande pour commander une éolienne incluant une pluralité d'unités de production d'énergie, le système de commande comprenant :

un ou plusieurs processeurs ; et
une mémoire couplée aux un ou plusieurs processeurs et incluant un code de programme qui, lorsqu'il est exécuté par les un ou plusieurs processeurs, amène le système de commande à :

déterminer que l'éolienne fonctionne dans un état de fonctionnement partiel, ou que les conditions sont propices à la commutation du fonctionnement vers cet état dans lequel seul un sous-ensemble de la pluralité d'unités de production d'énergie fonctionne ; **caractérisé en ce qu'**il amène le système de commande à déterminer une quantité cumulée de fonctionnement de l'éolienne dans l'état de fonctionnement partiel sur une période de temps ;
en réponse au fait que la quantité cumulée de fonctionnement dans l'état de fonctionnement partiel est inférieure à un seuil de fonctionnement partiel, faire fonctionner l'éolienne dans l'état de fonctionnement partiel, et
en réponse à la quantité cumulée de fonctionnement dans l'état de fonctionnement partiel qui est supérieure au seuil de fonctionnement partiel, restreindre le fonctionnement de l'éolienne dans l'état de fonctionnement partiel.

15. Éolienne, comprenant :

une pluralité d'unités de production d'énergie ; et
un système de commande configuré pour :

déterminer que l'éolienne fonctionne dans un état de fonctionnement partiel, ou que les conditions sont propices à la commutation du fonctionnement vers cet état dans lequel seul un sous-ensemble de la pluralité d'unités de production d'énergie fonctionne ; **caractérisé en ce qu'**elle est configurée pour déterminer une quantité cumulée de fonctionnement de l'éolienne dans l'état de fonctionnement partiel sur une période de temps ;
en réponse au fait que la quantité cumulée de fonctionnement dans l'état de fonctionnement partiel est inférieure à un seuil de fonctionnement partiel, faire fonctionner l'éolienne dans l'état de fonctionnement partiel, et
en réponse à la quantité cumulée de fonctionnement dans l'état de fonctionnement partiel qui est supérieure au seuil de fonctionnement partiel, restreindre le fonctionnement de l'éolienne dans l'état de fonc-

tionnement partiel.

**FIG. 1**

FIG. 2

FIG. 3

FIG. 4

**FIG. 5**

FIG. 6

## CONTROLLER

66

70

### MEMORY

74

APPLICATION

76

DATA
STRUCTURE

72

I/O INTERFACE

68

PROCESSOR

## FIG. 7

80

START

82

PARTIAL
OPERATION INDICATED
?

NO → 84
ENTER NON-PARTIAL
OPERATING STATE/DISABLE
ACCUMULATOR

YES

86
DETERMINE CUMULATIVE AMOUNT OF
OPERATION IN PARTIAL OPERATING STATE

88

CUMULATIVE
OPERATION EXCEEDS
THRESHOLD?

YES → 90
ENTER NON-OPERATIONAL
STATE/DISABLE
ACCUMULATOR

NO

92
PUT EACH ENERGY GENERATING UNIT IN
RESPECTIVE OPERATING/NON-OPERATING
MODE/ENABLE ACCUMULATOR

## FIG. 8

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020332765 A1

- EP 3591218 A1